# EUROPEAN PATENT SPECIFICATION

(11) **EP 1 501 758 B1**
(45) Date of publication and mention of the grant of the patent: **20.06.2018**
(21) Application number: 03719068.3
(22) Date of filing: 05.05.2003
(51) Int. Cl.: C01B 11/20, C02F 1/76

(54) **PROCESS FOR THE PREPARATION OF CONCENTRATED SOLUTIONS OF STABILIZED HYPOBROMITES**
VERFAHREN ZUR HERSTELLUNG VON KONZENTRIERTEN STABILISIERTEN HYPOBROMITLÖSUNGEN
PROCEDE DE PREPARATION DE SOLUTIONS CONCENTREES D'HYPOBROMITES STABILISES

(30) Priority: 06.05.2002 IL 14949902
(43) Date of publication of application: 02.02.2005
(73) Proprietor: Bromine Compounds Ltd., Beer-Sheva 84101 (IL)
(72) Inventor: FISHLER, Theodor, Morel, 34970 Haifa (IL); FELDMAN, David, 32159 Haifa (IL)
(74) Representative: Croce, Valeria
(86) International application number: PCT/IL2003/000363
(87) International publication number: WO 2003/093171

(56) References cited:
- WO-A-99/06320
- JP-A- 63 075 100
- US-A- 5 683 654

## Description

### Field of the Invention

This invention relates to a method for the preparation of concentrated solutions of stabilized hypobromites. This invention also relates to stabilized solutions of hypobromites obtained by the process of this invention.

### Background of the Invention

Hypobromous acid is one of the most potent sanitizers among the oxidizing halogenated compounds. Since it is a weaker acid than hypochlorous acid (pK=8.8 at 25°C), it is predominant at pH higher than 9.

Alkaline hypobromites can be prepared at low temperature, with good yield, if an excess of hydroxide is provided. A supersaturated solution can be prepared at 10°C, if 90% of the equivalent amount of bromine is fed to a 10 N solution of NaOH or KOH. The pentahydrate NaBrO.5H₂O begins to precipitate at -3°C, and keeps precipitating at lower temperatures, while the heptahydrate begins to precipitate at -7°C, and keeps precipitating at lower temperatures. However, the precipitation is slow. This mode of operation enables the preparation of MOBr solution (M = Na, K), but these are not stable enough for practical and commercial application. Concentration increase of the MOBr has a beneficial effect on the stability because of the simultaneous decrease of water concentration.

Hypobromites, e..g. sodium hypobromite, can also be prepared from the reaction of bromides with an oxidant, e.g., chlorine or hypochlorite. The reaction with hypochlorite has the disadvantage of yielding equivalent amounts of NaOBr and NaCl. Since the NaOCl solutions themselves contain NaCl in equivalent amount with NaOCl, and mostly contain at most 15.8wt% NaOCl, the obtainable concentration of NaOBr is relatively low.

The strong oxidizing potential of the hydrobromous acid and hypobromites made them very difficult to stabilize. Several classes of stabilizers, among them amides, amines, sulfonamides, melamine, sulfamic acid, cyanuric acid, and hydantoins, have been suggested in the prior art. However, amides and amines are generally oxidized by the hypobromites. Urea is decomposed down to nitrogen and other amides are transformed to amines that in turn can be oxidized to nitrogen.

Sulfamic acid and its salts have been mentioned as stabilizers, being stable to the attack of hypochlorous and hypobromous acids. The latter react at low temperatures with the alkali salts of sulfamic acid, affording chloro- and bromoamidosulfonates XHN-SO₃M. However, some strong oxidants, among them chlorine and bromine, can attack the NH₂ function liberating nitrogen.

USP 5,683,654 discloses a process which comprises preparing an aqueous solution of unstabilized alkali or alkaline earth metal hypobromite by mixing and reacting the corresponding hypochlorite with a water-soluble bromide ion source and stabilizing the result with an aqueous solution of an alkali metal sulfamate. USP 5,795,487 and 5,942,126 disclose essentially the same process.

USP 6,037,318 describes a process for the manufacture of alkaline bleaching compositions which comprises three steps: a) admixing a source of sodium hypochlorite and an amino compound which may be sulfamic acid, to form a pre-bromine admixture; b) adding to the mixture a source of bromine; and c) adjusting the pH of the resulting mixture to at least 13. However, since hypochlorite solutions generally contain chlorides in an equivalent amount with hypochlorites, the resulting mixtures contain large amounts of sodium chloride. Further, since the stabilizer, e.g., sulfamic acid, and the hypochlorite are mixed before the addition of a bromine source, the efficiency of the stabilizer is decreased, because it reacts with the hypochlorite. The stabilized solution has a low NaOBr concentration because of the low concentration of the starting NaOCl solution.
DE 3398850 discloses stabilizing solutions of sodium hypochlorite with a stabilizer which may be the sodium salt of amidosulfonic acid. It does not teach the preparation of hypobromite solutions.
USP 6,068,861 describes a process of making a concentrated liquid biocide formulation, in which bromine chloride and an alkali metal salt of sulfamic acid are mixed. Bromine chloride is difficult to handle and tends to dissociate to bromine and chlorine. It is not a commercial product and must be manufactured by using special skills and expensive installations for keeping it in liquid phase under pressure. WO 99/06320 describes a process for making a stabilised sodium hypobromite solution. It is a purpose of this invention to provide a method for obtaining stabilized solutions which contain high concentrations of alkali hypobromites.

It is another purpose of the invention to provide such solutions in which bromine is fed as such and not through a more complex source of bromine.

It is a further purpose of this invention to provide such a process that provides hypobromite solutions having an amount of active halogen, expressed as available chlorine, that is higher than that of any solution prepared according to the prior art.

It is a still further purpose of this invention to provide a sanitation method for bodies of water, in the pH range of 5-10, by feeding the hypobromite solution prepared according to the process of the invention, so that the proper active HOBr concentration (expressed as available chlorine) is achieved.

Other purposes and advantages of the invention will appear as the description proceeds.

### Summary of the Invention

The process of the invention comprises the following steps:
a) contacting a concentrated alkali hydroxide aqueous solution with bromine, in a hydroxide-bromine equivalent ratio that is from 2:1 to 3:1 and is preferably not less than 2.2:1;
b) allowing the mixture to react at a temperature from -5°C to 10°C, preferably 0 ± 5°C;
c) adding to the product of said reaction, which comprises unstabilized alkali hypobromite, a concentrated aqueous solution of a sulfamic compound, chosen from the group consisting of sulfamic acid and soluble sulfamic acid salts, so that a molar ratio of said acid or salt to hypobromite is from 1:1 to 1.5:1 and preferably about 1.1:1, at a temperature from -5°C to 10°C and preferably 0 ± 5°C, whereby to form stabilized hypobromite solution.

The preferred sulfamic compound is sodium sulfamate.

The aqueous solution obtained is free from alkali chloride. It contains, depending on the concentration of the sulfamic acid or sulfamate solution, an amount of active halogen, expressed as available chlorine, from 9 to 12 wt%, based on the weight of the whole solution and determined by jodometric titration, higher than that of any comparable solution prepared according to the prior art. The solution prepared by the process defined hereinbefore, has a higher stability than the solution of the prior art, as will be specified later on.

The preferred alkali hydroxide is sodium hydroxide.

The solution according to the invention contains alkali bromide, preferably e.g. sodium bromide. In an embodiment of the invention, said bromide can be further oxidized with a known oxidizer, e.g. sodium hypochlorite or oxone, at the same low temperature at which the alkali hydroxide has been allowed to react with bromine in the first stage of the process. Preferably, if hypochlorite is used as oxidizer, it should have a concentration of at least 10.5%, preferably at least 12.5%, expressed as available chlorine. The hypochlorite can be formed *in situ* from chlorine and a hydroxide, e.g. sodium hydroxide. The hypobromite is thus obtained in an amount equivalent to that of the alkali bromide, e.g. sodium bromide. The newly formed hypobromite is preferably stabilized by an addition of a sodium sulfamate solution at a molar ratio of sulfamate to hypobromite from 1:1 to 1.5:1 and preferably about 1.1:1, at a temperature from -5°C to 10°C and preferably 0 ± 5°C.

The content of the aqueous solution obtained according to the invention, prior to the further oxidation of the alkali bromide, is at least 15 wt% of alkali, e.g. sodium, hypobromite and 13 wt% of alkali, e.g. sodium, bromide. Its alkali, e.g. sodium, chloride content is less than 1 wt% and its amount of available halogen, expressed as chlorine, is at least 9%. It further contains from 17 to 21 wt% of sodium sulfamate. Said solution is an aspect of the present invention. The solution obtained after said further oxidation and addition of the second portion of sulfamate, e.g. sodium sulfamate contains, depending on the oxidant used and the sulfamate concentration, at least 10 wt% and up to 29 wt% of alkali, e.g. sodium, hypobromite (at least 6 and up to 15% available chlorine), less than 1 wt% of sodium bromide, less than 7 wt% and down to 0 wt% of alkali, e.g. sodium, chloride, and from 14 to 25 wt% of alkali sulfamate, e.g. sodium sulfamate. It too is a new product and an aspect of the invention.

### Brief Description of the Drawings

In the drawings:
Fig. 1 shows the change of active bromine calculated as available chlorine, in two solutions, one according to the invention and one according to the prior art, with the passage of time at 50°C; and
Fig. 2 shows the ratio decrease in the available chlorine under the same circumstances.

### Detailed Description of Preferred Embodiments

The following examples illustrate the invention without being limitative. The percentages given are all by weight.

### Example 1

A concentrated hypobromite solution is prepared by contacting, under vigorous stirring, 255.8 g of a concentrated aqueous NaOH solution (34.76 wt%) with 160 g bromine, added gradually so that the temperature is maintained at 0 ± 5°C. The NaOH/bromine molar ratio is 2.2:1. A clear, dark yellow solution of unstabilized sodium hypobromite is obtained, which contains 28.62 wt% NaOBr and 24.8 wt% NaBr. In spite of the very high concentration and low temperature, no precipitation occurred due to the very high solubility of NaBr.

An aqueous solution of sodium sulfamate is prepared by gradually adding at room temperature 789.4 g of an aqueous, 50 wt% NaOH solution to 1418 g of an aqueous slurry composed of 576 g sulfamic acid and 842 g of water. A clear solution containing 32 wt% of sodium sulfamate is obtained. 409 g of this sulfamate solution is added gradually to the solution of unstabilized sodium hypobromite, while maintaining the temperature at a maximum of 5°C. The molar ratio between Na sulfamate and NaOBr is 1.1:1. The resulting solution contains 119 g (15.8 wt%) stabilized NaOBr, 103 g (13.7 wt%) NaBr (one mole per mole of NaOBr), 131 (17.35 wt%) of sodium sulfamate. The amount of active halogen, expressed as available chlorine, determined by iodometry, is 8.7%, higher than in any solution prepared from hypochlorite and NaBr according to the prior art.

### Example 2

In a 1000 ml jacketed reaction vessel, provided with stirrer and temperature controller, is added 272.4 g (208 ml) of 32.3% aqueous NaOH solution. The solution is cooled, by means of -15°C brine, down to 0±5°C under stirring. Bromine, 160 g (51.5 ml) is added drop-wise, so that the temperature does not rise beyond 5°C. When the bromine addition is accomplished, 340.7 g of a solution of sodium sulfamate, prepared from 818.4 g (500 ml) 50 wt% NaOH solution, 1144.4 ml water and 900.8 g sulfamic acid, is added. Once the addition of the sodium sulfamate solution is finished, 564.4 g of aqueous sodium hypochlorite solution (12.5% available chlorine) containing 10.3 wt % NaCl is added, followed by other 340.7 g of the aforesaid sodium sulfamate solution. Throughout the process, the temperature is maintained at 0±5°C.

The final solution contained 14.3 wt% NaOBr (8.6% halogen expressed as chlorine) and the molar ratio Na sulfamate/NaOBr is 1.1:1. The stability of this solution was tested in accelerated conditions at 50°C: after eight days (equivalent to 64 days at room temperature): the available halogen content was unchanged.

### Example 3

A NaOBr/NaBr solution is prepared as in the first stage of Example 2. 291 g of a 45 wt% sodium sulfamate solution, prepared from the same amount of sulfamic acid and aqueous 50 wt% NaOH as in Example 2, but with only 381 g of water, is added gradually at 0±5°C. The stabilized NaOBr/NaBr solution has an available chlorine concentration as high as 11.3% and its composition is 18.9 wt% NaOBr, 16.4 wt% NaBr and 20.9 wt% sodium sulfamate.

### Example 4

The solution from Example 3 is treated, at 0±2°C with 564.4 g of a 12.5% solution hypochlorite, and immediately after, while keeping the temperature at the same level, with 291 g of 45 wt% sodium sulfamate solution, both added gradually. The solution thus obtained contained 16 wt% NaOBr (9.6% as available chlorine), 3.9wt% NaCl and 17.7 wt% sodium sulfamate.

### Example 5

A formulation was prepared as in Example 2, with the exception that 246 g of 50 wt% KOH solution was used instead of 176 g, 50 wt% NaOH solution. The resulting solution was treated as in Example 2, so that, finally, a stabilized KOBr solution, containing both KCl and NaCl (originally in the NaOCl solution) was obtained. The active halogen, expressed as available chlorine, was 8%.

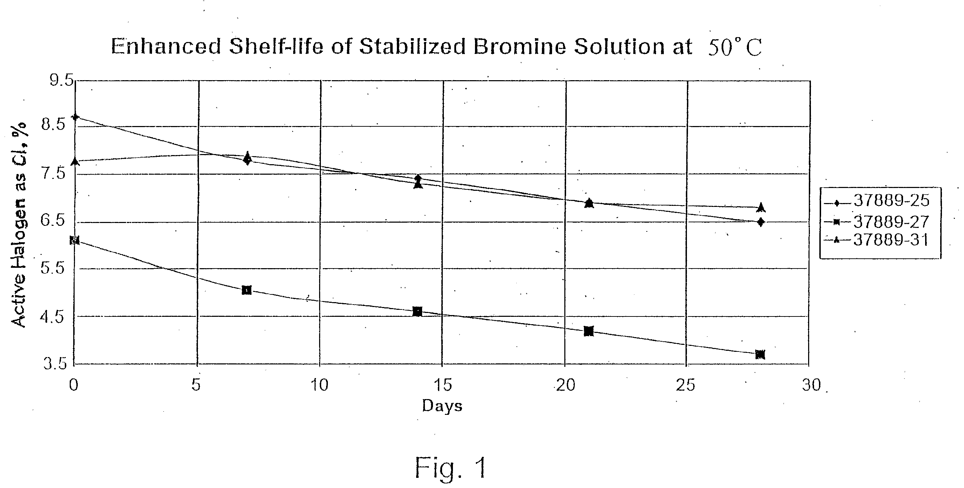

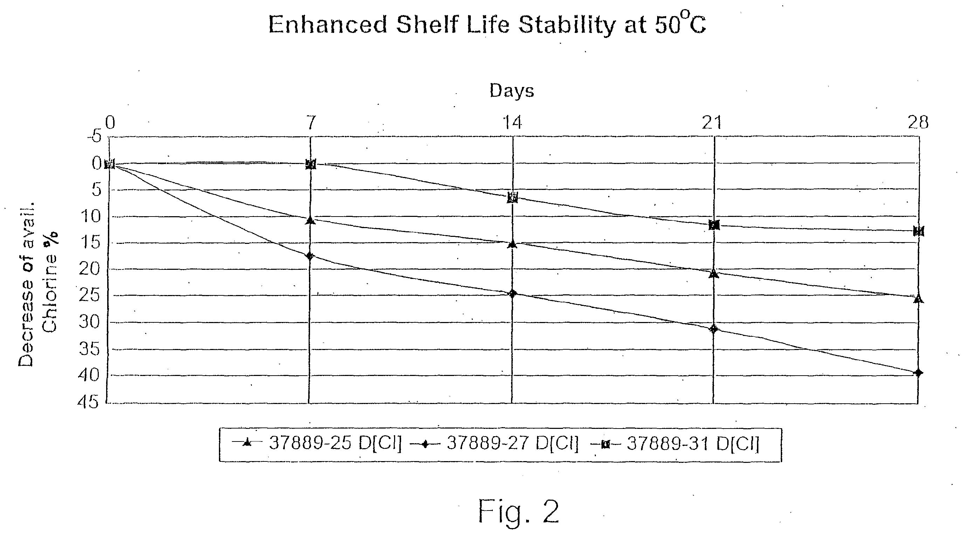

The stability of the solutions obtained by the invention is illustrated by the diagrams of Figs. 1 and 2. In Fig. 1 the shelf life of three solutions is compared. Solution 37889-25 was prepared according to Example 1; solution 37889-31 was prepared according to Example 2; and solution 37889-27 was prepared according to Example 1 of USP 5,942,126. The stability was determined at 50°C. The stability at room temperature (20°C) was calculated by assuming that at room temperature the available chlorine would decrease in eight days by the same rate as it decreases each day at 50°C. This is based on the known law that the reaction rate is doubled every 10°C.

## Claims

1. Process for the preparation of stabilized aqueous solutions of hypobromites, comprises the steps of:
a) contacting a concentrated alkali hydroxide aqueous solution with bromine, in a hydroxide-bromine equivalent ratio from 2:1 to 3:1;
b) allowing the mixture to react at a temperature from -5 to 10°C;
c) adding to the product of said reaction, which comprises unstabilized alkali hypobromite, an aqueous solution of a sulfamic compound, chosen in the group consisting of sulfamic acid, soluble sulfamic acid salts, and sodium sulfamate, at a molar ratio of sulfamate to hypobromite from 1:1 to 1.5:1, at a temperature between -5 to 10°C, whereby to form stabilized hypobromite solution.

2. Process according to claim 1, wherein the sulfamic compound is sodium sulfamate

3. Process according to claim 1, wherein the hydroxide-bromine molar ratio is not less than 2.2:1.

4. Process according to claim 1, wherein the mixture of alkali hydroxide solution with bromine is allowed to react at a temperature of 0±5°C.

5. Process according to claim 1, wherein the sulfamic compound solution is added to the reaction product comprising unstabilized alkali hypobromite, at a molar ratio of sulfamic compound to hypobromite of about 1.1:1 and at a temperature of 0±5°C.

6. Process according to claim 1, further comprising oxidizing with an oxidant the bromide contained in the stabilized hypobromite solution to form hypobromite.

7. Process according to claim 6, wherein the oxidant is chosen in the group consisting of sodium hypochlorite and oxone.

8. Process according to claim 7, wherein the oxidant is sodium hypochlorite and said sodium bromide is oxidized, at a temperature from -5 to 10°C.

9. Process according to claim 7, wherein the oxidant is sodium hypochlorite having a concentration of at least 10.5% expressed as available chlorine.

10. Process according to claim 9, wherein the sodium hypochlorite is formed *in situ* from chlorine and sodium hydroxide.

11. Process according to any one of claims 1 to 6, further comprising further stabilizing the stabilized hypobromite solution by an addition of a sodium sulfamate solution at a molar ratio of sulfamate to hypobromite from 1:1 to 1.5:1 at a temperature between -5 to 10°C.

12. Process according to claim 1, wherein said stabilized sodium hypobromite solution contains at least 16 wt% of sodium hypobromite, at least 13.0 wt% of sodium bromide, less than 1 wt% of sodium chloride, and from 17 to 21 wt% of sodium sulfamate content, and has an amount of active halogen, expressed as available chlorine, of at least 9%,

13. A stabilized sodium hypobromite solution containing at least 16 wt% of sodium hypobromite, at least 13.0 wt% of sodium bromide, less than 1 wt% of sodium chloride, and from 17 to 21 wt% of sodium sulfamate content, and having an amount of active halogen, expressed as available chlorine, of at least 9%.

14. A stabilized sodium hypobromite solution containing at least 10 wt% of sodium hypobromite, less than 1 wt% of sodium bromide, less than 7 wt% of sodium chloride, and from 14 to 25 wt% of sodium sulfamate content.

15. A stabilized sodium hypobromite solution, made according to claim 12.

## Patentansprüche

1. Verfahren zur Herstellung von stabilisierten wässrigen Lösungen von Hypobromiten, umfassend die Schritte:
a) in Kontakt bringen einer konzentrierten wässrigen Alkalihydroxidlösung mit Brom in einem Hydroxid-Brom-Äquivalentverhältnis von 2:1 bis 3:1;
b) Reagieren lassen der Mischung bei einer Temperatur von -5 bis 10 °C;
c) Zugeben einer wässrigen Lösung einer Sulfamidverbindung, ausgewählt in der Gruppe bestehend aus Sulfamidsäure, löslichen Sulfamidsäuresalzen und Natriumsulfamat, zu dem Produkt der Reaktion, welches unstabilisiertes Alkalihypobromit umfasst, mit einem Molverhältnis von Sulfamat zu Hypobromit von 1:1 bis 1,5:1, bei einer Temperatur zwischen -5 bis 10 °C, um eine stabilisierte Hypobromitlösung zu bilden.

2. Verfahren nach Anspruch 1, wobei die Sulfamidverbindung Natriumsulfamat ist.

3. Verfahren nach Anspruch 1, wobei das Hydroxid-Brom Molverhältnis nicht weniger als 2,2:1 ist.

4. Verfahren nach Anspruch 1, wobei die Mischung von Alkalihydroxidlösung mit Brom bei einer Temperatur von 0±5 °C reagieren gelassen wird.

5. Verfahren nach Anspruch 1, wobei die Lösung einer Sulfamidverbindung zu dem Reaktionsprodukt, das unstabilisiertes Alkalihypobromit umfasst, mit einem Molverhältnis von Sulfamidverbindung zu Hypobromit von etwa 1,1:1 und bei einer Temperatur von 0±5 °C zugegeben wird.

6. Verfahren nach Anspruch 1, ferner umfassend Oxidieren des in der stabilisierten Hypobromitlösung enthaltenen Bromids mit einem Oxidationsmittel um Hypobromit zu bilden.

7. Verfahren nach Anspruch 6, wobei das Oxidationsmittel in der Gruppe, bestehend aus Natriumhypochlorit und Oxon, ausgewählt ist.

8. Verfahren nach Anspruch 7, wobei das Oxidationsmittel Natriumhypochlorit ist und das Natriumbromid bei einer Temperatur von -5 bis 10 °C oxidiert wird.

9. Verfahren nach Anspruch 7, wobei das Oxidationsmittel Natriumhypochlorit ist, das eine Konzentration von mindestens 10,5 %, ausgedrückt als verfügbares Chlor, aufweist.

10. Verfahren nach Anspruch 9, wobei das Natriumhypochlorit *in situ* aus Chlor und Natriumhydroxid gebildet wird.

11. Verfahren nach einem der Ansprüche 1 bis 6, ferner umfassend ein weiteres Stabilisieren der stabilisierten Hypobromitlösung durch eine Zugabe einer Natriumsulfamatlösung mit einem Molverhältnis von Sulfamat zu Hypobromit von 1:1 bis 1,5:1 bei einer Temperatur zwischen -5 bis 10 °C.

12. Verfahren nach Anspruch 1, wobei die stabilisierte Natriumhypobromitlösung mindestens 16 Gew.-% Natriumhypobromit, mindestens 13,0 Gew.-% Natriumbromid, weniger als 1 Gew.-% Natriumchlorid und von 17 bis 21 Gew.-% Natriumsulfamatgehalt enthält und eine Menge an aktivem Halogen, ausgedrückt als verfügbares Chlor, von mindestens 9 % aufweist.

13. Stabilisierte Natriumhypobromitlösung, die mindestens 16 Gew.-% Natriumhypobromit, mindestens 13,0 Gew.-% Natriumbromid, weniger als 1 Gew.-% Natriumchlorid und von 17 bis 21 Gew.-% Natriumsulfamatgehalt enthält und eine Menge an aktivem Halogen, ausgedrückt als verfügbares Chlor, von mindestens 9 % aufweist.

14. Stabilisierte Natriumhypobromitlösung, die mindestens 10 Gew.-% Natriumhypobromit, weniger als 1 Gew.-% Natriumbromid, weniger als 7 Gew.-% Natriumchlorid und von 14 bis 25 Gew.-% Natriumsulfamatgehalt enthält.

15. Stabilisierte Natriumhypobromitlösung, hergestellt nach Anspruch 12.

## Revendications

1. Procédé pour la préparation de solutions aqueuses stabilisées d'hypobromites, qui comprend les étapes consistant à :
a) mettre en contact une solution aqueuse concentrée d'hydroxyde alcalin avec du brome, dans un rapport d'équivalent hydroxyde-brome de 2:1 à 3:1;
b) laisser réagir le mélange à une température de -5 à 10°C;
c) ajouter au produit de ladite réaction, qui comprend de l'hypobromite alcalin non stabilisé, une solution aqueuse d'un composé sulfamique choisi dans le groupe constitué par l'acide sulfamique, les sels solubles d'acide sulfamique, et le sulfamate de sodium, dans un rapport molaire du sulfamate à l'hypobromite de 1:1 à 1,5:1, à une température comprise entre -5 et 10°C, afin de former une solution stabilisée d'hypobromite.

2. Procédé selon la revendication 1, dans lequel le composé sulfamique est le sulfamate de sodium.

3. Procédé selon la revendication 1, dans lequel le rapport molaire hydroxyde/brome n'est pas inférieur à 2,2:1.

4. Procédé selon la revendication 1, dans lequel on laisse réagir le mélange de solution d'hydroxyde alcalin avec le brome à une température de 0±5°C.

5. Procédé selon la revendication 1, dans lequel la solution de composé sulfamique est ajoutée au produit réactionnel comprenant de l'hypobromite alcalin non stabilisé, dans un rapport molaire du composé sulfamique à l'hypobromite d'environ 1,1:1 et à une température de 0±5°C.

6. Procédé selon la revendication 1, comprenant en outre l'oxydation à l'aide d'un oxydant du bromure contenu dans la solution stabilisée d'hypobromite pour former de l'hypobromite.

7. Procédé selon la revendication 6, dans lequel l'oxydant est choisi dans le groupe constitué par l'hypochlorite de sodium et l'oxone.

8. Procédé selon la revendication 7, dans lequel l'oxydant est l'hypochlorite de sodium et ledit bromure de sodium est oxydé, à une température de -5 à 10°C.

9. Procédé selon la revendication 7, dans lequel l'oxydant est de l'hypochlorite de sodium ayant une concentration d'au moins 10,5%, exprimée sous forme de chlore disponible.

10. Procédé selon la revendication 9, dans lequel l'hypochlorite de sodium est formé in situ à partir du chlore et de l'hydroxyde de sodium.

11. Procédé selon l'une quelconque des revendications 1 à 6, comprenant en outre une stabilisation supplémentaire de la solution stabilisée d'hypobromite par addition d'une solution de sulfamate de sodium dans un rapport molaire du sulfamate à l'hypobromite de 1:1 à 1,5:1 à une température comprise entre -5 et 10°C.

12. Procédé selon la revendication 1, dans lequel ladite solution stabilisée d'hypobromite de sodium contient au moins 16% en poids d'hypobromite de sodium, au moins 13,0% en poids de bromure de sodium, moins de 1% en poids de chlorure de sodium, et une teneur en sulfamate de sodium de 17 à 21% en poids, et a une quantité d'halogène actif, exprimée en chlore disponible, d'au moins 9%.

13. Solution stabilisée d'hypobromite de sodium contenant au moins 16% en poids d'hypobromite de sodium, au moins 13,0% en poids de bromure de sodium, moins de 1% en poids de chlorure de sodium, et une teneur en sulfamate de sodium de 17 à 21% en poids, et ayant une quantité d'halogène actif, exprimée en chlore disponible, d'au moins 9%.

14. Solution stabilisée d'hypobromite de sodium contenant au moins 10% en poids d'hypobromite de sodium, moins de 1% en poids de bromure de sodium, moins de 7% en poids de chlorure de sodium, et une teneur en sulfamate de sodium de 14 à 25% en poids.

15. Solution stabilisée d'hypobromite de sodium, préparée selon la revendication 12.
